# EUROPÄISCHE PATENTSCHRIFT

(11) **EP 2 686 281 B1**
(45) Veröffentlichungstag und Bekanntmachung des Hinweises auf die Patenterteilung: **29.04.2015**
(21) Anmeldenummer: 12713875.8
(22) Anmeldetag: 16.03.2012
(51) Int. Cl.: C04B 7/32, C04B 7/24, C04B 7/30, C04B 7/40

(54) **VERFAHREN ZUR HERSTELLUNG VON BINDEMITTELN**
PROCESS FOR THE PRODUCTION OF BINDERS
PROCÉDÉ DE PRODUCTION DE LIANTS

(30) Priorität: 18.03.2011 DE 102011014346
(43) Veröffentlichungstag der Anmeldung: 22.01.2014
(73) Patentinhaber: Ecoloop Gmbh, 38640 Goslar (DE)
(72) Erfinder: STUMPF, Thomas, 38667 Bad Harzburg (DE); BOENKENDORF, Ulf, 31188 Holle (DE); BAUMANN, Leonhard, 94501 Aldersbach (DE); MÖLLER, Roland, 38667 Bad Harzburg (DE)
(74) Vertreter: Erb, Henning
(86) Internationale Anmeldenummer: PCT/EP2012/001194
(87) Internationale Veröffentlichungsnummer: WO 2012/126598

(56) Entgegenhaltungen:
- WO-A1-2010/066316
- DE-C- 385 624
- DE-C- 427 801
- DE-C- 552 975
- DE-C- 567 531
- DE-C- 853 722
- GB-A- 951 211
- US-A- 4 256 502
- ROHRBACH R: "Herstellung von Oelschieferzement und Gewinnung elektrischer Energie aus Oelschiefer nach dem Rohrbach-Lurgi-Verfahren", ZKG. ZEMENT, KALK, GIPS, BAUVERLAG, WIESBADEN, DE, Bd. 58, Nr. 7, 1. Juli 1969 (1969-07-01), Seiten 293-296, XP008154633, ISSN: 0340-5095
- BURNHAM A K ET AL: "Effects of gas environment on mineral reactions in Colorado oil shale", FUEL, IPC SCIENCE AND TECHNOLOGY PRESS, GUILDFORD, GB, Bd. 59, Nr. 12, 1. Dezember 1980 (1980-12-01), Seiten 871-877, XP025456177, ISSN: 0016-2361, DOI: 10.1016/0016-2361(80)90037-X [gefunden am 1980-12-01]
- ARNON BENTUR ET AL: "Modification of the Cementing Properties of Oil Shale Ash", AMERICAN CERAMIC SOCIETY BULLETIN,, Bd. 63, Nr. 2, 1. Januar 1984 (1984-01-01) , Seiten 290-300, XP001272414,
- ISH-SHALOM M ET AL: "Cementing properties of oil shale ash: I. effect of burning method and temperature", CEMENT AND CONCRETE RESEARCH, PERGAMON PRESS, ELMSFORD, NY, US, Bd. 10, Nr. 6, 1. November 1980 (1980-11-01), Seiten 799-807, XP008154752, ISSN: 0008-8846, DOI: 10.1016/0008-8846(80)90008-3 [gefunden am 2003-02-12]

## Beschreibung

Die vorliegende Erfindung befasst sich mit einem Verfahren zur Herstellung von Bindemitteln durch Brennen von mineralischen Rohstoffgemischen in einem Schachtofen mit Gegenstromvergasung.

Derartige Rohstoffgemische enthalten beispielsweise Ölsande und Ölschiefer, ein entsprechendes Verfahren ist aus der DE 427 801 C bekannt. Die DE 552 975 C beschreibt ein Verfahren zur Herstellung von Bindemitteln aus Ölkreide durch Entölung. Weiterhin beschreibt die DE 385 624 C ein Verfahren, bei welchem vor dem Brennen des Zements ÖL und die Zementmasse raffiniert werden, wobei der Schwefel in Schwefelwasserstoff überführt wird. Rohrbach beschreibt in Heft 7/1969 "Zement-Kalk-Gips", Bauverlag GmbH, die Herstellung von Ölschieferzement aus Ölschiefer. Die D 853 722 C befasst sich mit einem Verfahren zur Überführung von Kieselsäure in den löslichen Zustand zwecks Herstellung hydraulischer Bindemittel, während die GB 951 211 A wiederum die Herstellung von Zement aus Ölschiefer beschreibt. DE 567 531 C schlägt schließlich ein weiteres Verfahren zur Herstellung von hydraulischen Bindemitteln mit Ölschiefer vor.

Ölsande und Ölschiefer sind weltweit vorkommende Sedimentgesteine, die je nach Lagerstätte 5 M.-% bis 65 M.-% organische Substanz enthalten, das sogenannte Kerogen.

Als *Ölsand* wird eine Mischung aus Ton, Silikaten, Wasser und Kohlenwasserstoffen bezeichnet. Aufgrund dieser mineralogischen Zusammensetzung zeigen Ölsande hohe Anteile an SiO₂, CaCO₃, Al₂O₃ und Fe₂O₃.

Die anorganischen Bestandteile des *Ölschiefers* sind im Wesentlichen Tonminerale, Quarz und Feldspat sowie unterschiedliche Anteile an CaO-haltigen Verbindungen, insbesondere Calcit mit geringeren Gehalten an Dolomit und/oder Gips. Damit ergibt sich eine der Ölsande ähnliche oxidische Zusammensetzung. Aufgrund seiner chemisch-mineralogischen Zusammensetzung ist gebrannter Ölschiefer in der Zementindustrie als hydraulisches Bindemittel oder zumindest als hydraulischer Zusatzstoff seit langem bekannt.

Ölschieferasche zeigt je nach Lagerstätte eine breite Schwankung in der chemischen Zusammensetzung:

| Bestandteil | Konzentrationsbereich [%] | | |
|---|---|---|---|
| SiO₂ | 12 | ... | 51 |
| Al₂O₃ | 5 | ... | 16 |
| Fe₂O₃ | 6 | ... | 7 |
| CaO | 18 | ... | 60 |
| MgO | 1 | ... | 4 |
| Na₂O+K₂O | 1 | ... | 2 |
| SO₃ | 5 | ... | 10 |

Damit besteht gebrannter Ölschiefer bei niedrigen Ca-Gehalten aus calciniertem Ton mit puzzolanischen Eigenschaften, bei ausreichend hohen CaO-Gehalten insbesondere aus Dicalciumsilicat und Calciumaluminaten. In der Zementindustrie sind diese Phasen als Träger der hydraulischen Eigenschaften bekannt bzw. werden gezielt hergestellt.

U.a. wird gebrannter Ölschiefer in den europäischen und deutschen Zementnormen mit der Zementbezeichnung CEM II-T nach DIN EN 196 berücksichtigt. Mit einer Druckfestigkeit von mindestens 25 N/mm² bei Lagerung an feuchter Luft nach 28 Tagen ist der gebrannte Ölschiefer Hauptbestandteil von Portlandschieferzement.

Sehr problematisch beim Brennen von Ölschiefer / -sanden ist dessen hoher Schwefelanteil sowie der Umstand, dass wegen der heterogenen Zusammensetzung des Ausgangsmaterials die bislang eingesetzten Brennverfahren nicht zur Herstellung hochwertiger Bindemittel unterschiedlicher Ausprägung geeignet waren.

Die Aufgabe der vorliegenden Erfindung besteht darin, ein Verfahren zur Herstellung von Bindemitteln zu schaffen, das in der Lage ist, auch bei hohen Schwefelanteilen wirtschaftlich zu arbeiten und das sich eignet, gezielt bestimmte Qualitäten an Bindemitteln herzustellen.

Erfindungsgemäß wird die Aufgabe durch ein Verfahren gelöst, bei welchem Ölschiefer- und/oder Ölsandschüttungen durch gezieltes Agglomerieren in Partikel bestimmter Größe und Konsistenz überführt werden, wobei der Wasseranteil zur mechanischen Stabilisierung des Agglomerats auf weniger als 25% und die Porosität der Agglomerate auf bis zu 25% eingestellt wird, und die Agglomerate bei Temperaturen zwischen 800°C und 1500°C unter reduktiven Bedingungen über den Gesamtprozess mit einem Lambda < 1 in dem Vertikalschachtofen zu Bindemitteln gebrannt werden, wobei die Bindemitteleigenschaften durch gezielte Zugabe von CaO-haltigen Stoffen eingestellt werden und/oder mittels des im Ausgangsmaterial vorhandenen und/oder zugegebenen CaO vorhandene Schwefelanteile des Ölsandes und/oder -schiefers gebunden werden.

Zunächst bietet der Vertikalschachtofen den Vorteil eines kontinuierlich unter definierten Prozessbedingungen ablaufenden Verfahrens, wobei die in dem Ölschiefer bzw. -sand enthaltenen Kohlenstoffverbindungen optimal zum Erzeugen der notwendigen Prozesswärme genutzt werden können. Der aufsteigende Gasstrom bildet mit der Schüttung eine Art Wärmetauscher und stellt den für die Reaktion notwendigen Sauerstoff bereit.

Die gezielte Zugabe von CaO entfaltet dabei zwei Vorteile. Zum einen laufen unter den reduktiven Bedingungen des Verfahrens vorteilhafte Schwefelbindemechanismen ab, die z.B. eine kostenintensive Rauchgasentschwefelung entbehrlich machen. Dabei ist anzumerken, dass das in bestimmter Konsistenz zugegebene CaO eine gezieltere Beeinflussung der Verfahrensabläufe erlaubt, als das undefiniert in den natürlichen Ölschiefer- und Ölsandvorkommen gebundene CaO. Zum anderen lässt sich durch die Zugabe des CaO die Qualität des Bindemittels einstellen. So können in Abhängigkeit auch von den eingesetzten Rohmaterialien hydraulische und latent-hydraulische Bindemittel, puzzolanische Bindemittel oder Tonerdezement-Bindemittel hergestellt werden. Typische Zusammensetzungen, die durch das erfindungsgemäße Verfahren herstellbar sind, sind in dem beigefügten Rankin-Diagramm veranschaulicht. Hierbei handelt es sich im Einzelnen um:
Hydraulische und latent-hydraulische Bindemittel:
   CaO mit einem Anteil von 28-90%
   SiO₂ mit einem Anteil von 10-70%
   Al₂O₃ mit einem Anteil von 2-25%
Puzzolanische Bindemittel:
   CaO mit einem Anteil von 2-20%
   SiO₂ mit einem Anteil von 55-90%
   Al₂O₃ mit einem Anteil von 8-45%
Tonzementerde-Bindemittel:
   CaO mit einem Anteil von 28-60%
   SiO₂ mit einem Anteil von 3-20%
   Al₂O₃ mit einem Anteil von 40-70%

Agglomerieren im Sinne der Erfindung dient als Oberbegriff für die Verfahren der mechanischen Kornvergrößerung und meint das Zusammenlagern und Aneinanderbinden von feindispersen festen Primärpartikeln zu größeren Teilchenverbänden, den Agglomeraten.

Agglomerationsprozesse ermöglichen eine gezielte Einstellung der Produkteigenschaften von Schüttgütern, hier den Schüttungen aus Ölschiefer- und/oder Ölsandbestandteilen. So kann beispielsweise das Produkthandling durch eine gute Rieselfähigkeit oder einen verringerten Staubanteil im Schüttgut wesentlich verbessert werden. Aber auch Eigenschaften wie Auflöseverhalten, Granulatgröße, -form und -festigkeit sowie Lagerstabilität oder Abriebstabilität lassen sich bzw. müssen definiert eingestellt werden.

Allgemein wird zwischen der Press- und der Aufbauagglomeration unterschieden.

Bei der *Aufbauagglomeration* oder auch dem Feuchtgranulieren wird das zu agglomerierende Pulver mit einer geeigneten Flüssigkeit so gemischt, dass sich kapillare Bindungen zwischen den Partikeln bilden können und so ein festes, mechanisch belastbares Agglomerat entsteht.

Entsprechende labor- oder großtechnische Anlagen sind Granulierteller, Granuliertrommel, Granuliermischer oder auch Wirbelschichtgranulierung. Angewendet wird das Verfahren beispielsweise in der Keramik-, Baustoff- und Glasindustrie, der Metallurgie, im Umweltschutz sowie zur Herstellung von Futter- und Düngemitteln.

Bei der *Pressagglomeration* werden aufgeschüttete Partikel durch Einwirkung äußerer Druckkräfte verdichtet. Dabei nimmt die Zahl der Kontaktflächen zwischen den Partikeln zu; durch die Umordnung der Partikel verringert sich die Porosität und durch die plastische Verformung im Kontaktbereich wird die Haftung stark erhöht. Infolge der dabei auftretenden hohen Reibungskräfte können dabei örtlich Versinterungsvorgänge auftreten. Mit der Brikettierung wird folglich das Volumen der zu brikettierenden Partikel erheblich reduziert. Durch die Zusammenballung erhält das Material andererseits Eigenschaften, die denen von vergleichbarem massiven Material (z.B. Kohle, Massivholz usw.) ähneln oder ihnen gleichkommen.

Voraussetzung für gute Ergebnisse der Pressagglomeration sind eine geeignete Zusammensetzung bzw. Eigenschaften wie Kornverteilung, Kornform, Porosität und Komprimierbarkeit und Stabilität der einzelnen Rohstoffkomponenten.

Die durch Pressagglomeration hergestellten Formkörper können durch Verwendung von Presshilfsmitteln hinsichtlich ihrer Stabilität deutlich verbessert werden. Gute Erfolge zur Stabilisierung der Agglomerate sind erzielt worden mit u.a. Papierfasern, Holzmehl, Zellulose, Schichtsilicate/Tonminerale, Porenbetongranulate, porenbetonähnliche Granulate, expandierte Perlite, Bims und weitere Leichtzuschläge verschiedener Kornzusammensetzung (z.B. 0-0,1 mm, 0,1-0,5 mm, 0,5-1,0 mm).

Da die Zusammensetzung und die Konsistenz der natürlichen Vorkommen an Ölsand und Ölschiefer sehr heterogen sein kann, ist es in vielen Fällen von Vorteil, vor den Agglomerierungmaßnahmen ein gezieltes Zerkleinern der Ölsandes und/oder Ölschiefers durchzuführen, um durch das Agglomerieren Partikel gleichmäßiger und bestimmter Größe und Zusammensetzung erzeugen zu können, die ihrerseits aus kleineren aneinander haftenden Partikeln aufgebaut sind. Es versteht sich, dass dies bei Ausgangsdimensionen die im Bereich der angestrebten Partikelgröße oder darüber liegen, nicht möglich ist. Ebenso ist es nicht möglich, der Schüttung, die wenigstens teilweise aus Agglomeraten besteht, auf ein definiertes Maß zerkleinerte Bestandteile des Ölschiefers beizumischen.

Voraussetzung für die Funktion dieser Vertikalschachtöfen ist eine lose Schüttung des Brennguts, die aufgrund dessen Stückigkeit ein Zwickelvolumen bildet und damit das Durchströmen der entsprechenden Brenn- und Verbrennungsgase durch die Schüttung gewährleistet. Da der Ausgangsstoff, also Ölsand- oder Ölschiefer geologisch als auch abbau- und aufbereitungsbedingt Feinanteile aufweist, müssen diese erst in eine schachtofengängige, also stückige Kornfraktion gebracht werden.

Zur Herstellung dieser Kornfraktionen können marktübliche Verfahren wie z.B. die Aufbau- oder die Pressagglomeration verwendet werden. Unter dem Begriff der Pressagglomeration wird in dieser Erfindung sowohl die Kompression durch Stempelpressen oder Wälzdruckmaschinen als auch die Extrusion durch Strangpressen bzw. Lochpressen verstanden. Bevorzugte Kornfraktionen zeigen eine kompakte, gerundete Kornform und ein Volumen zwischen 20 und 60 cm³.

Eine weitere Voraussetzung für die Verwendung im Schachtofen ist eine ausreichende sowohl mechanische als auch thermische Stabilität der Agglomerate.

Die mechanische Stabilität wird insbesondere über den Anteil flüssiger Phasen in den Agglomeraten eingestellt, bewährt hat sich hier ein Anteil kleiner 12 % besser kleiner 7 %. Liegen diese Anteile über den genannten Werten aber jedoch noch unter 25 %, ist eine Verwendung noch möglich, allerdings wird ein höherer Unterkornanteil durch die notwendigen Transport- und Dosiervorgänge verursacht. Der Einsatz in Schachtöfen kann aber durch eine Unterkornabsiebung oberhalb des Reaktors/Schachtofens gewährleistet werden.

Die thermische Stabilität ist abhängig bzw. steuerbar über die mineralogische und chemische Zusammensetzung der Agglomerate. Zu berücksichtigen ist, dass die Verbrennungsgase der organischen Anteile aus den Ölsanden oder Ölschiefer, aus den Agglomeraten entweichen können, d.h. dass die Verbrennungsgase keinen nennenswerten Expansionsdruck aufbauen können, der zu einem Zerplatzen der Agglomerate führen würde. Bewährt haben sich Agglomerate mit einer Porosität von bis zu 25 % bzw. einer Rohdichte von mindestens 1,8 kg/l.

Das gewählte Verfahren bietet den Vorteil, das aufgrund der feinteiligen Rohstoffe bzw. der Möglichkeit Korrekturstoffe homogen mit in die Agglomerate dispergieren zu können, eine gezielte Zusammensetzung des Brennguts und damit der Eigenschaften und Qualität des Endproduktes einstellen zu können. Einzig begrenzender Faktor ist die wirtschaftliche Verfügbarkeit geeigneter Korrekturstoffe.

Die Zusammensetzung von Ölsanden und Ölschiefer zeigt die folgende Tabelle:

| Bestandteil | Konzentrationsbereich [%] | | |
|---|---|---|---|
| SiO₂ | 6 | ... | 25 |
| Al₂O₃ | 2 | ... | 7 |
| Fe₂O₃ | 3 | ... | 4 |
| (Ca, Mg) CO₃ | 18 | ... | 65 |
| Na₂O+K₂O | 0,5 | ... | 1 |
| SO₃ | 2 | ... | 10 |
| org. C-Verbindungen | 65 | ... | 5 |

Die Tabelle zeigt einen sehr breiten Bereich der geologisch bedingten Zusammensetzung, berücksichtigt man zusätzlich noch die mögliche Zielzusammensetzung des Produktes - wie in der folgenden Abbildung rot in das Rankin-Diagramm eingezeichnet, ergibt sich ein weites Feld möglicher geeigneter hydraulischer Produkte.

Die Korrekturstoffe können sowohl aus der vorhandenen Lagerstätte im Bereich der üblicherweise vorhandenen natürlichen Schwankungsbreite in der chemischen und mineralogischen Zusammensetzung als auch durch Zufuhr externer Rohstoffe wie Quarzsand, Kalkstein, Tone und anderer Ca, Si, Fe oder Al-Träger

Klassische (natürliche) Rohstoffe bei der Zementherstelllung sind Kalkstein und Ton oder deren natürlich vorkommende Mischungen - die Kalkmergel sowie Sand und Eisenerz. Es besteht aber auch de Möglichkeit sekundäre Rohstoffe zu verwenden, als Beispiel seien hier Flugaschen, Walzzunder, Stahlwerksstäube und Schlacken genannt.

Es wird an dieser Stelle nochmals auf das beigefügte Rankin-Diagramm verwiesen, das zeigt, dass sich das Feld der möglichen Produkte von hydraulischen Kalken über Zemente und latent-hydraulischen bis zu puzzolanischen Bindemitteln erstreckt.

Voraussetzung dieser Bindemittel ist natürlich das entsprechende Brennen der Rohstoffmischungen. Üblicherweise liegen die notwendigen Temperaturen, diese sind u.a. von den erwünschten Phasen abhängig - zwischen 800 °C und 1500 °C. Neben dem entscheidenden Einfluß der Brenntemperatur sind auch die Brenndauer und weitere Faktoren der Ofen-/Reaktorführung zu berücksichtigen.

Gegebenenfalls können auch kohlenstoffhaltige Substanzen zudosiert werden. Die Verwendung von flüssigen und gasförmigen Brennstoffen ist beispielsweise ebenso denkbar wie die Verwendung fester Brennstoff, wie z.B. Holz. Diese Menge kann derart überschüssig bemessen sein, dass das aus der Verbrennung und Entsäuerung freiwerdende CO₂ mit dem Kohlenstoff entsprechend dem Boudouard-Gleichgewicht zu CO reduziert wird, das einen verwertbaren Energieträger darstellt. Gleichzeitig kann so die Einhaltung der reduktiven Gesamtbedingungen gesteuert werden.

Charakteristische Phasen des Brennproduktes sind je nach Einstellung des Rohstoffgemisches typischerweise Calciumaluminate, Calciumsilicate (Di- und Tricalciumsilicat) und Calciumsulfat. Der Calciumsulfatgehalt des gebrannten Ölschiefers oder -sandes reicht im Allgemeinen für eine normgemäße Verzögerung des Erstarrens aus. Gegebenenfalls ist der für die Verzögerung des Erstarrens optimale Calciumsulfatgehalt einzustellen.

Das so hergestellte hydraulische, latent-hydraulische oder puzzolanische Bindemittel kann nach Mahlen und ggf. Löschen als Bindemittel in der Bau- und Baustoffindustrie eingesetzt werden. Typische Anwendungsmöglichkeiten der Baustoffindustrie ist die Herstellung von Beton, Mörtel, Betonfertigteilen und Porenbeton. Für die Bauindustrie sei hier der Erdbau mit den Anwendungen der Bodenstabilisierung oder -sanierung genannt.

Bedingt durch die gezielten Herstellungsmöglichkeiten und der damit zu ermöglichenden engen Qualitätsschwankungen kann das Produkt durchaus für hochwertige Anwendungen gezielt hergestellt werden.

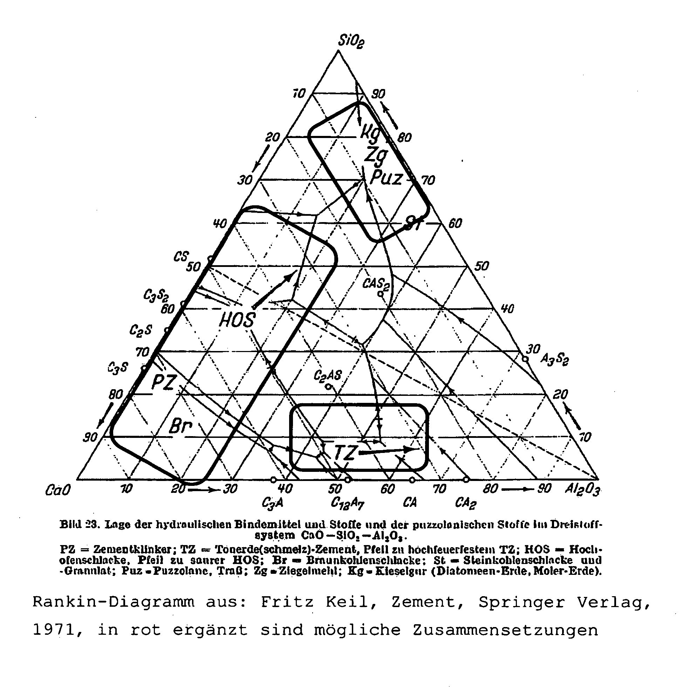

## Patentansprüche

1. Verfahren zur Herstellung von Bindemitteln durch Brennen von mineralischen Rohstoffgemischen in einem Schachtofen mit Gegenstromvergasung, **dadurch gekennzeichnet, dass** Ölschiefer- und/oder Ölsandschüttungen durch gezieltes Agglomerieren in Partikel bestimmter Größe und Konsistenz überführt wird, wobei der Wasseranteil zur mechanischen Stabilisierung des Agglomerats auf weniger als 25% und die Porosität der Agglomerate auf bis zu 25% eingestellt wird, und die Agglomerate bei Temperaturen zwischen 800°C und 1500°C unter reduktiven Bedingungen über den Gesamtprozess mit einem Lambda < 1 in dem Vertikalschachtofen zu Bindemitteln gebrannt werden, wobei die Bindemitteleigenschaften durch gezielte Zugabe von CaO-haltigen Stoffen eingestellt werden und/oder mittels des im Ausgangsmaterial vorhandenen und/oder zugegebenen CaO vorhandene Schwefelanteile des Ölsandes und/oder -schiefers gebunden werden.

2. Verfahren nach Anspruch 1, **dadurch gekennzeichnet, dass** der Ölschiefer und/oder Ölsand vor dem Agglomerieren gezielt zerkleinert wird und/oder der Ölschiefer gezielt auf ein bestimmtes Maß zerkleinert und der Schüttung mit den Agglomeraten beigegeben wird.

3. Verfahren nach Anspruch 1 oder 2, **dadurch gekennzeichnet, dass** der Wasseranteil der Agglomerate weniger als 12%, vorzugsweise weniger als 7% beträgt.

4. Verfahren nach einem der vorhergehenden Ansprüche, **dadurch gekennzeichnet, dass** die Agglomerate eine Rohdichte von wenigstens 1,8 kg/l besitzen.

5. Verfahren nach einem der vorhergehenden Ansprüche, **dadurch gekennzeichnet, dass** der Ölsand und/oder - schiefer durch Aufbauagglomeration (Feuchtgranulieren) konditioniert wird.

6. Verfahren nach einem der Ansprüche 1 bis 4, **dadurch gekennzeichnet, dass** der Ölsand und/oder Ölschiefer durch Pressagglomeration konditioniert wird, d.h. Partikelanhäufungen durch Druckeinwirkung verdichtet werden.

7. Verfahren nach Anspruch 6, **dadurch gekennzeichnet, dass** bei der Herstellung der Agglomerate Presshilfsmittel eingesetzt werden.

8. Verfahren nach Anspruch 7, **dadurch gekennzeichnet, dass** die Presshilfsmittel aus Papierfasern, Holzmehl, Cellulose und/oder anderen kohlenstoffhaltigen Substanzen bestehen, die im Brennprozess oxidationsfähig sind.

9. Verfahren nach Anspruch 7 oder 8, **dadurch gekennzeichnet, dass** die Presshilfsmittel Schichtsilicate/Tonminerale, Porenbetongranulate, porenbetonähnliche Granulate, expandierte Perlite, Bims und/oder weitere Leichtzuschläge verschiedener Kornzusammensetzung enthalten.

10. Verfahren nach einem der Ansprüche 5 bis 9, **dadurch gekennzeichnet, dass** für die Pressagglomeration Stempelpressen oder Wälzdruckmaschinen zur Kompression oder Strangpressen oder Lochpressen zur Extrusion eingesetzt werden.

11. Verfahren nach einem der vorgehenden Ansprüche, **dadurch gekennzeichnet, dass** zum Erreichen einer bestimmten Bindemittelqualität dem Prozess externe Rohstoffe beigegeben werden, die Quarzsand, Kalkstein, Tone, Ca, Si, Fe und/oder Al-Träger enthalten.

12. Verfahren nach einem der Ansprüche 1 bis 10, **dadurch gekennzeichnet, dass** dem Prozess sekundäre Rohstoffe beigegeben werden.

13. Verfahren nach Anspruch 12, **dadurch gekennzeichnet, dass** die sekundären Rohstoffe aus Flugaschen, Walzzunder, Stahlwerkstäuben und/oder Schlacken ausgewählt werden.

14. Verfahren nach einem der vorhergehenden Ansprüche, **dadurch gekennzeichnet, dass** als charakteristische Phasen des Brennproduktes, d.h. des hergestellten Bindemittels Calciumaluminate, Calciumsilicate und Calciumsulfat eingestellt werden.

15. Verfahren nach einem der vorhergehenden Ansprüche, **dadurch gekennzeichnet, dass** die hergestellten hydraulischen, latent-hydraulischen oder puzzolanischen Bindemittel gemahlen und als Bindemittel in der Bau- und Baustoffindustrie eingesetzt werden.

16. Verfahren nach Anspruch 15, **dadurch gekennzeichnet, dass** der Branntkalk-Anteil des Bindemittels vor der endgültigen Verwendung gelöscht wird.

17. Verfahren nach einem der vorhergehenden Ansprüche, **dadurch gekennzeichnet, dass** dem Verfahren kohlenstoffhaltige Substanzen zudosiert werden.

18. Verfahren nach Anspruch 17, **dadurch gekennzeichnet, dass** die Menge der kohlenstoff-haltigen Substanzen derart überschüssig bemessen wird, dass das aus Verbrennung und Entsäuerung freiwerdende CO₂ mit dem Kohlenstoff entsprechend dem Boudouard-Gleichgewicht zu CO reduziert wird.

19. Verfahren nach einem der vorhergehenden Ansprüche, **dadurch gekennzeichnet, dass** die mineralischen Rohstoffgemische derart gewählt werden, dass ein hydraulische oder latent-hydraulisches Bindemittel hergestellt wird, das wenigstens die folgenden Bestandteile enthält:
CaO mit einem Anteil von 28-90%
SiO₂ mit einem Anteil von 10-70%
Al₂O₃ mit einem Anteil von 2-25%.

20. Verfahren nach einem der Ansprüche 1 bis 18, **dadurch gekennzeichnet, dass** die mineralischen Rohstoffgemische derart gewählt werden, dass ein puzzolanisches Bindemittel hergestellt wird, das wenigstens die folgenden Bestandteile enthält:
CaO mit einem Anteil von 2-20%
SiO₂ mit einem Anteil von 55-90%
Al₂O₃ mit einem Anteil von 8-45%.

21. Verfahren nach einem der Ansprüche 1 bis 18, **dadurch gekennzeichnet, dass** die mineralischen Rohstoffgemische derart gewählt werden, dass ein Tonerdezement-Bindemittel hergestellt wird, das wenigstens die folgenden Bestandteile enthält:
CaO mit einem Anteil von 28-60%
SiO₂ mit einem Anteil von 3-20%
Al₂O₃ mit einem Anteil von 40-70%.

## Claims

1. Method for producing binders by burning mineral raw-material mixtures in a shaft furnace having counter-current gasification, **characterised in that** oil shale- and/or oil sand beds are converted by targeted agglomeration into particles of a certain size and consistency, the water component being adjusted to less than 25 % for mechanically stabilising the agglomerate, and the porosity of the agglomerate being adjusted to up to 25 %, and the agglomerates being burned at temperatures between 800 °C and 1500 °C under reductive conditions throughout the entire process at a λ <1 in the vertical shaft furnace to form binders, the binder properties being adjusted by targeted addition of CaO-containing substances and/or by sulfur components of the oil sand and/or oil shale being bound by means of the CaO that is present in and/or added to the starting material.

2. Method according to claim 1, **characterised in that** the oil shale and/or oil sand is comminuted in a targeted manner prior to the agglomeration and/or the oil shale is comminuted in a targeted manner to a certain size and added to the bed together with the agglomerates.

3. Method according to either claim 1 or claim 2, **characterised in that** the water component of the agglomerates amounts to less than 12 % and preferably less than 7 %.

4. Method according to any of the preceding claims, **characterised in that** the agglomerates have a raw density of at least 1.8 kg/l.

5. Method according to any of the preceding claims, **characterised in that** the oil sand and/or oil shale is conditioned by wet agglomeration (moist granulation).

6. Method according to any of claims 1 to 4, **characterised in that** the oil sand and/or oil shale is conditioned by compression agglomeration; that is, particle accumulations are densified by the exertion of pressure.

7. Method according to claim 6, **characterised in that** in the production of the agglomerates, compression aids are used.

8. Method according to claim 7, **characterised in that** the compression aids consist of paper fibres, wood dust, cellulose and/or other carbon-containing substances, which are capable of oxidising in the burning process.

9. Method according to either claim 7 or claim 8, **characterised in that** the compression aids contain sheet silicates/clay minerals, cellular concrete granulates, cellular-concrete-like granulates, expanded_perlite, pumice and/or further lightweight aggregates of various particle compositions.

10. Method according to any of claims 5 to 9, **characterised in that** for the compression-agglomeration, stamping presses or roller-pressure machines are used for compression or extrusion presses or punch presses are used for extrusion.

11. Method according to any of the preceding claims, **characterised in that** for attaining a certain binder quality, external raw materials which contain quartz sand, limestone, clays, Ca, Si, Fe and/or Al carriers are added to the process.

12. Method according to any of claims 1 to 10, **characterised in that** secondary raw materials are added to the process.

13. Method according to claim 12, **characterised in that** the secondary raw materials are selected from fly ash, rolling mill scale, steel works powders, and/or slags.

14. Method according to any of the preceding claims, **characterised in that** calcium aluminates, calcium silicates and calcium sulfate are adjusted as characteristic phases of the product of burning, i.e., the binder produced.

15. Method according to any of the preceding claims, **characterised in that** the hydraulic, latent-hydraulic or pozzolanic binders produced are ground and used as binders in the construction and building-materials industries.

16. Method according to claim 15, **characterised in that** the quicklime component of the binder is slaked before the final use.

17. Method according to any of the preceding claims, **characterised in that** carbon-containing substances are metered into the method.

18. Method according to claim 17, **characterised in that** the quantity of carbon-containing substances is calculated to be excessive such that the CO₂ liberated from combustion and deacidification is reduced with the carbon to CO in accordance with the Boudouard reaction.

19. Method according to any of the preceding claims, **characterised in that** the mineral raw-material mixtures are selected such that a hydraulic or latent-hydraulic binder is produced which contains at least the following components:
CaO in a proportion of 28-90 %
SiO₂ in a proportion of 10-70 %
Al₂O₃ in a proportion of 2-25 %.

20. Method according to any of claims 1 to 18, **characterised in that** the mineral raw-material mixtures are selected such that a pozzolanic binder is produced which contains at least the following components:
CaO in a proportion of 2-20 %
SiO₂ in a proportion of 55-90 %
Al₂O₃ in a proportion of 8-45 %.

21. Method according to any of claims 1 to18, **characterised in that** the mineral raw-material mixtures are selected such that an aluminous-cement binder is produced which contains at least the following components:
CaO in a proportion of 28-60 %
SiO₂ in a proportion of 3-20 %
Al₂O₃ in a proportion of 40-70 %.

## Revendications

1. Procédé d'obtention de liants par calcination de mélanges de matériaux bruts minéraux dans un four à cuve verticale avec vaporisation à contre courant,
**caractérisé en ce qu'**
on transforme des charges de schiste et/ou de sable pétrolifère en vrac par agglomération appropriée en des particules de dimensions et de consistance prédéfinies, la proportion d'eau étant réglée, pour permettre une stabilisation mécanique des agglomérés à moins de 25 % et la porosité de ces agglomérés étant réglée jusqu'à 25 %, et les agglomérés sont calcinés dans le four à cuve verticale à des températures comprises entre 800°C et 1500°C dans des conditions réductrices pendant la totalité du procédé avec un facteur lambda < 1 pour obtenir des liants, les propriétés des liants étant réglées par addition appropriée de matériaux renfermant du CaO et/ou étant fixées par la proportion de soufre dans le sable et/ou le schiste pétrolifère présente dans le matériau de départ ou dans le CaO ajouté.

2. Procédé conforme à la revendication 1,
**caractérisé en ce que**
le schiste et/ou de sable pétrolifère est concassé de manière appropriée avant l'agglomération et/ou le schiste pétrolifère est concassé de manière appropriée à la dimension souhaitée et le produit en vrac est ajouté aux agglomérés.

3. Procédé conforme à la revendication 1 ou 2,
**caractérisé en ce que**
la proportion d'eau dans les agglomérés est inférieure à 12 % et de préférence inférieure à 7 %.

4. Procédé conforme à l'une des revendications précédentes,
**caractérisé en ce que**
les agglomérés ont une densité apparente d'au moins 1.8 kg/l.

5. Procédé conforme à l'une des revendications précédentes,
**caractérisé en ce que**
le sable et/ou du schiste pétrolifère est conditionné par agglomération par constitution (granulation par voie humide).

6. Procédé conforme à l'une des revendications 1 à 4,
**caractérisé en ce que**
le sable et/ou le schiste pétrolifère est conditionné par agglomération par compression, c'est-à-dire que l'accumulation de particules est densifiée sous l'action de la pression.

7. Procédé conforme à la revendication 6,
**caractérisé en ce que**
lors de la fabrication des agglomérés ont utilise un adjuvant de compression.

8. Procédé conforme à la revendication 7,
**caractérisé en ce que**
l'adjuvant de compression est constitué par des fibres de papier, de la farine de bois, de la cellulose et/ou d'autres composés renfermant du carbone qui sont susceptibles de s'oxyder pendant le procédé de calcination.

9. Procédé conforme à la revendication 7 ou 8,
**caractérisé en ce que**
l'adjuvant de compression renferme des phyllosilicates/minéraux argileux, des granulés de béton poreux, des granulés similaires à du béton poreux, de la perlite expansée, du béton ponce et/ou d'autres compléments légers ayant différentes compositions de grain.

10. Procédé conforme à l'une des revendications 5 à 9,
**caractérisé en ce que**
pour effectuer l'agglomération par compression, on utilise des presses de poinçonnage ou des machines de laminage pour effectuer une compression ou des extrudeuses ou des presses à poinçonner pour effectuer une extrusion.

11. Procédé conforme à l'une des revendications précédentes,
**caractérisé en ce que**
pour obtenir un liant ayant une qualité déterminée, on ajoute au procédé des matériaux bruts externes qui renferment du sable quartzeux, de la chaux, de l'argile, du calcium, du silicium, du fer, et/ou des supports d'aluminium.

12. Procédé conforme à l'une des revendications 1 à 10,
**caractérisé en ce que**
l'on ajoute au procédé des matériaux bruts secondaires.

13. Procédé conforme à la revendication 12,
**caractérisé en ce que**
les matériaux bruts secondaires sont choisis parmi les cendres volantes, les pailles, les poussières d'aciéries ou les scories.

14. Procédé conforme à l'une des revendications précédentes,
**caractérisé en ce qu'**
en tant que phase caractéristique du produit de calcination, c'est-à-dire du liant obtenu, on utilise de l'aluminate de calcium, du silicate de calcium et du sulfate de calcium.

15. Procédé conforme à l'une des revendications précédentes,
**caractérisé en ce que**
les liants hydrauliques, hydrauliques latents ou puzzolaniques obtenus sont broyés et utilisés dans l'industrie de la construction et des matériaux de construction.

16. Procédé conforme à la revendication 15,
**caractérisé en ce que**
la proportion de chaux vive du liant est éteinte avant l'utilisation finale.

17. Procédé conforme à l'une des revendications précédentes,
**caractérisé en ce que**
l'on ajoute au procédé en les dosant des substances renfermant du carbone.

18. Procédé conforme à la revendication 17,
**caractérisé en ce que**
la quantité de substance renfermant du carbone est réglée en excès de sorte que le CO₂ libéré lors de la calcination et de la neutralisation soit réduite par le carbone en CO selon la réaction d'équilibre de Boudouard.

19. Procédé conforme à l'une des revendications précédentes,
**caractérisé en ce que**
le mélange de matières brutes minérales est choisi de manière à obtenir un liant hydraulique ou hydraulique latent qui renferme au moins les éléments suivants :
CaO en proportion de 28-90 %
SiO₂ en proportion de 10-70 %
Al₂O₃ en proportion de 2-25 %

20. Procédé conforme à l'une des revendications 1 à 18,
**caractérisé en ce que**
le mélange de matières brutes minérales est choisi de façon à obtenir un liant puzzolanique qui renferme au moins les éléments suivants :
CaO en proportion de 2-20 %
SiO₂ en proportion de 55-90 %
Al₂O₃ en proportion de 8-45 %

21. Procédé conforme à l'une des revendications 1 à 18,
**caractérisé en ce que**
le mélange de matières brutes minérales est choisi de façon à obtenir un ciment alumineux qui renferme au moins les éléments suivants :
CaO en proportion de 28-60 %
SiO₂ en proportion de 3-20 %
Al₂O₃ en proportion de 40-70 %
